# EUROPEAN PATENT SPECIFICATION

(11) **EP 4 623 034 B1**
(45) Date of publication and mention of the grant of the patent: **04.11.2026**
(21) Application number: 23809629.1
(22) Date of filing: 22.11.2023
(51) Int. Cl.: C09D 5/00, C09D 5/24

(54) **METHOD FOR PRODUCING AN ARTICLE COMPRISING AN ANTI-STATIC COATING, AND ARTICLE COMPRISING SUCH A COATING**
VERFAHREN ZUR HERSTELLUNG EINES ARTIKELS MIT ANTISTATISCHER BESCHICHTUNG UND ARTIKEL MIT SOLCH EINER BESCHICHTUNG
PROCÉDÉ DE FABRICATION D'UN ARTICLE COMPRENANT UN REVÊTEMENT ANTISTATIQUE ET ARTICLE COMPRENANT UN TEL REVÊTEMENT

(30) Priority: 24.11.2022 EP 22209454
(43) Date of publication of application: 01.10.2025
(73) Proprietor: ETA SA Manufacture Horlogère Suisse, 2540 Grenchen (CH)
(72) Inventor: PARTOVI NIA, Raheleh, 2540 Grenchen (CH)
(74) Representative: ICB SA
(86) International application number: PCT/EP2023/082710
(87) International publication number: WO 2024/110537

(56) References cited:
- WO-A1-2010/076314
- WO-A1-2014/109770
- WO-A1-2016/138455
- CN-A- 114 591 673

## Description

### Technical field of the invention

The present invention relates to articles comprising a substrate and an anti-static coating on at least a portion of the substrate's surface. The present invention further relates to method for producing such articles, and to the use of such articles.

### Background

It is well known that polymeric materials and ceramics are good electrical insulators. Consequently, one of the consequences is that electrical charges on the surface of polymers and ceramics are not easy to remove from the surface, leading to a build-up of the electrostatic charges.

Electrostatic charges can be obtained by rubbing or abrading the surface with another surface, for example rubbing a cloth against a polyester surface. Electrostatic charges can also be generated in several industrial process, in particular processes carried out in dry environments. Examples of such processes include, without being limited, injection moulding, blow moulding, thermoforming, rotational moulding, parts conveying and collection and assembly processes.

One of the effects of these electrostatic charges present on the surface is that objects lying in the vicinity of the substrate('s surface), such as within a few centimetres, ae attracted to and fixed in the surface. This is in particular the case for small size and lightweight particles, such as dust or debris. This typically results in an often undesirable aesthetic effect, i.e. the surface seems dirty. This can also further result in the industry in contaminations and quality issues (e.g. products being rejected for having sub-standard quality), and even in safety hazards, which can lead to production issues and even explosions.

In order to decrease or even suppress the attraction of such particles, it is necessary to decrease the intensity of the electrostatic field, i.e. to decrease the number of static charges which are present at the surface of the substrate.

The term "anti-static" (or antistatic) generally refers to including a property of not retaining and/or developing an appreciable electrostatic charge. Many articles are considered to have an acceptable anti-static property when a surface that has been rubbed with an appropriate cloth does not attract or affix dust or small particles. An anti-static surface or material is generally capable of quickly dissipating accumulated electrostatic charges. The ability to evacuate a static charge can be quantified by measuring the time required for such a charge to be dissipated (so-called "charge decay time"). Typical preferred charge decay times for an anti-static article are 400 milliseconds or less, and more preferably 200 milliseconds or less, which is much lower when compared to static articles, which typically have charge decay times in the order of several tens of seconds, sometimes up to several minutes.

Several ways to reduce the electrostatic charge build-up exist nowadays, and include, without being limited thereto, so-called "internal anti-static agents" and "external anti-static compounds".

Internal anti-static agents refer to additives mixed with the raw materials, such as the polymers or monomers, during processing of the polymer material or the polymeric article. Internal anti-static agents typically migrate to the polymer surface and by this form an anti-statically active surface. Non-limiting examples of such agents include polyvalent alcohols, esters of long chain fatty acids, polyalcohols, and aminoalcohols.

External anti-static compounds refer to hygroscopic compounds that are applied as coatings on the surface of the polymer. Due to their hydroscopic character, they absorb water and lower thereby the surface resistance. Non-limiting examples of such agents include ammonium, sulphonium or phosphate salts.

WO01/55752 discloses an anti-static, anti-reflection, transparent coating for a transparent substrate, such as lenses, for example ophthalmic lenses. The coatings comprises at least one electrically conductive layer, and has a sheet resistance of at most 10¹⁰ Ohm/square. The coatings comprise multiple layers, wherein the anti-static layer (an electrically conductive layer) may be located anywhere in the multiple-layers of the coating. The electrically conductive layer is preferably indium tin oxide.

WO2016/005782 discloses an anti-static (coating) composition being a transparent hard coat formed on a transparent substrate. The anti-static coating composition has a charge decay time of less than 400 ms, a light transmittance of at least 90 %, and a haze value of at most 0.50 %. The anti-static composition comprises a salt comprising an alkali cation (e.g. a lithium cation) or rare earth ion and a counter ion, an organic compound comprising ether and optionally hydroxyl functional groups, and a binder. The composition can further comprise a filler or a cross-linking agent. CN 114 591 673 A is a typical disclosure of generic articles according to the prior art**.**

One of the disadvantages of internal anti-static agents and external anti-static agents is their compatibility with several polymers or ceramics. Another disadvantage is that the anti-static effect provided is typically temporarily, thereby limiting the lifetime of the articles. Consequently, in order to have a long-term anti-static effect, external anti-static compounds must be reapplied after a certain duration, which adds to the cost and complexity of manufacturing.

### Summary of the invention

The present invention aims to overcome one or more of the above drawbacks. It is an aim of the invention to provide an article comprising a substrate comprising an anti-static coating, thereby providing protection to the surface against damage, such as scratches or indentations. It is a further aim to provide an article comprising a substrate and a transparent anti-static coating. It is a further aim to provide an article comprising a substrate and an anti-static coating having an excellent adhesion to the substrate.

It is a further aim of the invention to provide a method for producing such an article, wherein the method does not require the use of harsh or toxic compounds, is performed at moderate temperatures and does not require long treatment times.

According to a first aspect of the invention, there is disclosed an article comprising a substrate and an anti-static coating present on at least part of a surface of the substrate as set out in the appended claims.

The substrate comprises or substantially consists of a ceramic and/or a polymer. Advantageously, the polymer is polyurethane, preferably thermoplastic polyurethane.

With "substantially consisting" is meant in the present invention that the amount of impurities or other components present in the substrate is advantageously below 1 % by weight, preferably below 0.5 % by weight, more preferably below 0.1 % by weight, such as below the detection limit of analysis techniques used to determine the composition, such as X-ray photoelectron spectroscopy (XPS).

Advantageously, the article is a watch component. Non-limiting examples of watch components include watch cases and bracelets.

The anti-static coating is a cross-linked inorganic organic hybrid coating comprising at least one epoxy functional group R¹. Optionally, the epoxy functional group comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine.

The anti-static coating, in other words the cross-linked inorganic organic hybrid coating, further comprises silicon and/or titanium. Advantageously, the cross-linked inorganic organic hybrid coating is bonded to the ceramic and/or the polymer by means of polar interaction between the coating and the substrate.

The cross-linked inorganic organic hybrid coating further comprises an ammonium compound and/or phosphoric acid (H₃PO₄). Advantageously, the coating comprises an ammonium compound and phosphoric acid.

Advantageously, the ammonium compound is a trialkyl ammonium compound or group. Advantageously, each alkyl group is, individually, C₁-C₂₀ alkyl, preferably C₁-C₁₂ alkyl, for example C₁-C₈ alkyl, C₁-C₆ alkyl, more preferably C₁-C₄ alkyl, such as methyl, ethyl, propyl or butyl.

Optionally, the ammonium compound is bonded to a silane compound. Advantageously, the ammonium compound is covalently bonded to the silane compound.

Advantageously, the anti-static coating has a surface resistivity of at most 10¹⁰ Ω/cm, preferably at most 10⁹ Ω/cm, even more preferably at most 10⁸ Ω/cm, as measured by means of a multimeter with spot-like electrodes.

Advantageously, the anti-static coating has an optical transmittance in the visible light of at least 90 %, preferably at least 92 %, more preferably at least 95 %. A coating having an optical transmittance in the visible light of at least 90 % is considered a transparent coating in the light of the present disclosure. In other words, the anti-static coatings of the present invention are advantageously transparent.

Advantageously, the anti-static coating has a luminous absorption of less than 5 %, preferably less than 4 %, for example less than 3 %, more preferably less than 2 %.

Advantageously, when the anti-static coating comprises silicon, the cross-linked inorganic organic hybrid coating further comprises carbon-silicon bonds. Advantageously, when the anti-static coating comprises titanium, the cross-linked inorganic organic hybrid coating further comprises carbon-titanium bonds. Advantageously, when the anti-static coating comprises silicon and titanium, the cross-linked inorganic organic hybrid coating further comprises carbon-silicon bonds and carbon-titanium bonds.

According to a second aspect of the invention, there is disclosed a method for producing an article comprising a substrate and an anti-static coating present on at least part of a surface of the substrate as set out in the appended claims.

The method comprises providing a substrate. The substrate is advantageously as described hereinabove.

The method further comprises providing a first compound according to formula (I) 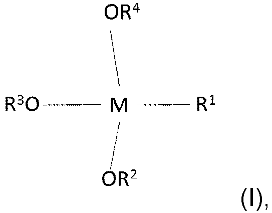 wherein
M is silicon or titanium,
R¹ is an epoxy functional group, and
R², R³, and R⁴ are each independently from each other H, a C₁-C₂₀ alkyl, a C₃-C₁₀ aryl, C₂-C₂₀ alkenyl, C₄-C₂₀ alkylaryl, or C₄-C₂₀ arylalkyl.

The method further comprises providing a second compound according to formula (II) 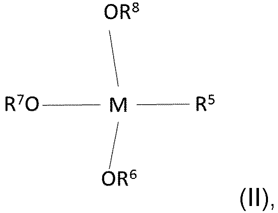 wherein
M is silicon or titanium,
R⁵ is a cross-linkable functional group, and
R⁶, R⁷, and R⁸ are each independently from each other H, a C₁-C₂₀ alkyl, a C₃-C₁₀ aryl, C₂-C₂₀ alkenyl, C₄-C₂₀ alkylaryl, or C₄-C₂₀ arylalkyl.

With "cross-linkable functional group" is meant in the light of the present disclosure a functional group which is capable of reacting with other functional groups. Upon reaction, covalent bonds are formed, thereby realising a cross-linked polymer. A cross-linked polymer can be considered as a polymer having a three dimensional structure.

Advantageously, R⁵ is a thermo-cross-linkable group and/or a photo-cross-linkable group. In other words, R⁵ can be thermo-cross-linkable, photo-cross-linkable, or both.

With a "thermo-cross-linkable group" is meant in the light of the present disclosure that cross-linking of R⁵ is induced and/or takes place by thermal cross-linking, also named thermal curing. Thermal curing is performed by exposing the (thermo-)cross-linkable group, and in the present disclosure thus the pre-polymer comprising such a cross-linkable group, to an elevated temperature, i.e. by heating the pre-polymer.

With a "photo-cross-linkable group" is meant in the light of the present disclosure that cross-linking of R⁵ is induced and/or takes place by photochemical cross-linking, also named photochemical curing. Photochemical curing is performed by exposing the (photo-)cross-linkable group, and in the present disclosure thus the pre-polymer comprising such a cross-linkable group to a radiation. Advantageously, the radiation comprises one or more of infrared (IR) radiation, ultraviolet (UV) radiation, or radiation with light having a wavelength in the wavelength range of visible light (VIS).

Advantageously, R⁵ is a functional group selected from the group consisting of an epoxy, a (meth)acrylate, an ester, a mercapto, a vinyl, and a (meth)acrylated urethane. With "(meth)acrylate" is meant in the present disclosure that the functional group can be an acrylate or a methacrylate.

Advantageously, R², R³, R⁴, R⁶, R⁷, and R⁸ are each independently from each other H or C₁-C₂₀ alkyl, preferably C₁-C₈ alkyl, more preferably C₁-C₆ alkyl, most preferably C₁-C₄ alkyl. In particular, R², R³, R⁴, R⁶, R⁷, and R⁸ are each independently methyl (-CH₃, i.e. C₁ alkyl)), or ethyl (-C₂H₅, i.e. C₂ alkyl).

The method further comprises hydrolysing the first compound and the second compound in the presence of water. Upon hydrolysis, the C₁-C₈ alkyl chain of any one of R², R³, R⁴, R⁶, R⁷, and R⁸ is converted into or reacts with the formation of a hydrogen atom, thereby forming hydroxyl groups. The hydrolysis reaction also produces alcohol molecules of formula CₓH₂ₓ₊₁OH, wherein x is the number of carbon atoms in the C₁-C₈ alkyl chain of R², R³, R⁴, R⁶, R⁷, and R⁸ (i.e. x is between 1 and 8).

The method further comprises condensing the hydrolysed first compound and the hydrolysed second compound. Upon condensation, water molecules are formed and removed. A pre-polymer is obtained from the hydrolysed first compound and the hydrolysed second compound. The pre-polymer comprises R¹ and R⁵ as functional groups. The pre-polymer can be considered a so-called "sol".

The method further comprises adding an ammonium compound and/or phosphoric acid to the pre-polymer. Advantageously, the ammonium compound is as described hereinabove. Advantageously, the ammonium compound and/or the phosphoric acid dissolves or disperses at least partially in the pre-polymer.

Advantageously, the ammonium compound and/or phosphoric acid is (are) added so that the pre-polymer comprising the one or more ammonium salt and/or phosphoric acid comprises between 5 % and 50 % by weight of the ammonium compound and/or phosphoric acid, preferably between 10 % and 45 % by weight, more preferably between 15 % and 40 % by weight, such as between 20 % and 30 % by weight, based on the total weight of the pre-polymer comprising the ammonium compound and/or phosphoric acid.

The pre-polymer comprising the ammonium compound and/or phosphoric acid is applied to at least part of a surface of the substrate. The application can be done by methods known in the art, for example casting or dipping the substrate into the pre-polymer, spraying or electrospraying the pre-polymer onto the substrate, bar coating, or roll-to-roll coating.

The method further comprises inducing cross-linking of the pre-polymer comprising the ammonium compound and/or phosphoric acid applied to at least part of the surface of the substrate. Advantageously, the pre-polymer is cross-linked by means of cross-linking of the cross-linkable functional group R⁵.

When R⁵ is a thermo-cross-linkable functional group, the cross-linking is advantageously induced and/or performed by exposing the pre-polymer to a temperature up to 250 °C, advantageously a temperature between 25 °C and 250 °C, preferably between 30 °C and 250 °C, such as between 40 °C and 225 °C, more preferably between 50 °C and 200 °C, even more preferably between 100 °C and 175 °C.

When R⁵ is a photo-cross-linkable functional group, the cross-linking is advantageously induced and/or performed by exposing the pre-polymer to radiation. Advantageously, the radiation is IR radiation or UV radiation, or a combination thereof.

When R⁵ is a thermo-cross-linkable and a photo-cross-linkable functional group, the cross-linking is advantageously induced and/or performed by exposing the pre-polymer to a temperature up to 250 °C and to radiation.

Upon cross-linking of the pre-polymer, an article comprising the substrate and an anti-static coating covering at least part of a surface of the substrate is obtained. The anti-static coating comprises at least one functional group R¹ (a so-called "gel"). The anti-static coating is a cross-linked inorganic organic hybrid coating. The anti-static coating has a surface resistivity of at most 10¹⁰ Ω/cm, preferably at most 10⁹ Ω/cm, even more preferably at most 10⁸ Ω/cm, as measured by means of a multimeter with spot-like electrodes.

Advantageously, the cross-linked inorganic organic hybrid coating is bonded to the ceramic and/or the polymer of the substrate by means of polar interaction.

According to a third aspect of the invention, there is disclosed a use of an article of the first aspect as set out in the appended claims. Advantageously, the article is used in a watch.

According to a fourth aspect of the invention, there is disclosed a use of a method of the second aspect as set out in the appended claims. Advantageously, the method is used for obtaining an anti-static watch component.

Advantages of the methods of the present disclosure include, without being limited thereto, the possibility to apply an anti-static coating to a wide range of substrates, wherein the anti-static coating has an excellent adhesion to the substrate. A further advantage is that the methods are particularly suited to apply an anti-static coating to substrates having a complex geometry in a homogeneous way. Coating thickness can be well controlled so that the thickness stays within the tolerances. Such tolerances are typically defined by the use of the article obtained.

### Brief description of the figures

Aspects of the invention will now be described in more detail with reference to the appended drawings, wherein same reference numerals illustrate same features and wherein:
- Figure 1 schematically represents the steps of a method according to the present disclosure,
- Figure 2 shows a ceramic plate comprising an anti-static coating according to the invention,
- Figure 3 shows a ceramic watch case comprising an anti-static coating according to the invention,
- Figures 4A and 4B show the (anti-)static behaviour of an untreated and a treated ceramic plate, respectively,
- Figure 5 shows a TPU watch bracelet comprising an anti-static coating according to the invention.

### Detailed description of the invention

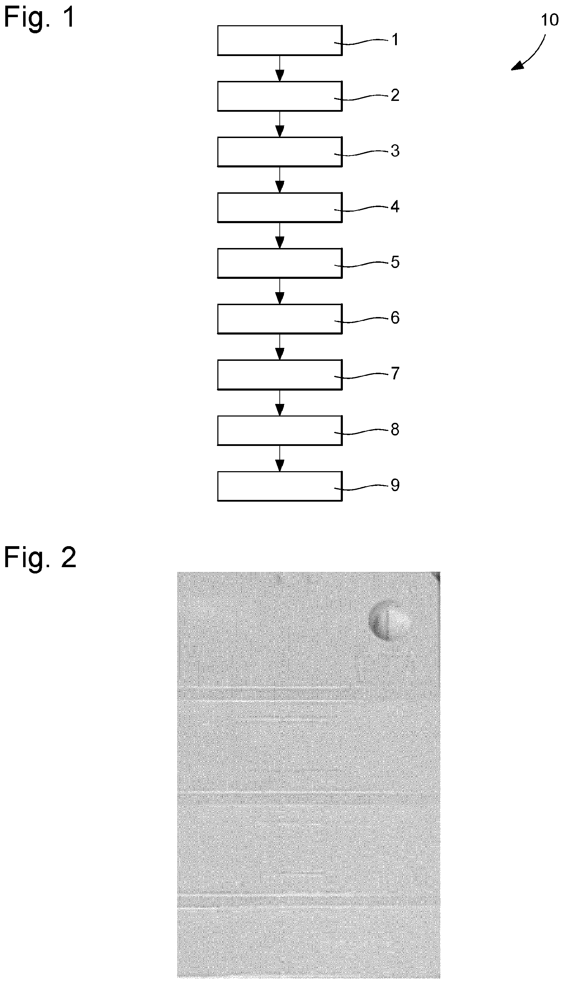

Figure 1 schematically shows the steps of a method according to the present disclosure. The method 10 comprises the step of providing a substrate 1. Advantageously, the substrate comprises or substantially consists of a ceramic and/or a polymer.

Advantageously, the substrate comprises a ceramic or a combination of ceramics. A particularly suited ceramic is a bioceramic. A bioceramic is, in the light of the present disclosure, a hybrid composition of a ceramic material or compound and a biosourced material. For example, the biosourced material can be sourced from castor-plant oil.

Alternatively or additionally, and advantageously, the substrate comprises a polymer or a combination of polymers, including copolymers. Non-limiting examples of polymers and copolymers include polyurethane, such as thermoplastic polyurethane (TPU), polyethylene, polypropylene, polyester (e.g. PBT or PET), polyamide (e.g. PA6, PA6-6), polyimide, polyamide-imide, polystyrene, polytetrafluoroethylene (PTFE), polymethyl methacrylate, polycarbonate, and methacrylate acrylonitrile butadiene styrene (MABS).

Optionally, the substrate can comprise further additives. Such additives can be additives known in the art, such as fillers or flame-retardants.

The method further comprises the provision of a first compound 3 according to formula (I), wherein formula (I) is as described hereinabove.

Advantageously, R¹ comprises or substantially consists of an epoxy functional group (i.e. an oxirane functional group). For example, R¹ can be an alpha-epoxy or 1,2-epoxy, which comprises a three-member ring structure.

Advantageously, "C₁-C₂₀ alkyl" includes alkyl functional groups comprising between 1 and 20 carbon atoms in the chain. Advantageously, the C₁-C₂₀ alkyl is C₁-C₁₂ alkyl, preferably C₁-C₁₀ alkyl, such as C₁-C₈ alkyl, C₁-C₆ alkyl, or C₁-C₄ alkyl.

Advantageously, "C₃-C₁₀ aryl" includes aryl functional groups comprising between 3 and 10 carbon atoms in the chain. For example, R¹ can comprise a phenyl functional group, or can be C₃-C₂₀ alkyl phenyl.

Advantageously, "C₂-C₂₀ alkenyl" includes alkenyl functional groups comprising between 2 and 20 carbon atoms in the chain. Advantageously, the C₂-C₂₀ alkenyl is C₂-C₁₂ alkenyl, preferably C₂-C₁₀ alkenyl, such as C₂-C₈ alkenyl, C₂-C₆ alkyl, or C₂-C₄ alkenyl.

The method further comprises the provision of a second compound 4 according to formula (II), wherein formula (II) is as described hereinabove.

Advantageously, the first compound and the second compound are hydrolysed 5 as explained hereinabove. Advantageously, the hydrolysed first compound and the hydrolysed second compound are condensed 6 as explained hereinabove, thereby obtaining a pre-polymer.

The method further comprises adding an ammonium compound and/or phosphoric acid 7 to the pre-polymer. Advantageously, the ammonium compound is as described hereinabove. Advantageously, the ammonium compound and/or phosphoric acid is (are) added to the pre-polymer in an amount as described hereinabove.

Optionally, further components or substances can be added to the pre-polymer. For example, a surfactant can be added to the pre-polymer. Advantageously, when a surfactant is added, it is added in an amount between 0.5 % and 30 % by weight, based on the total weight of the pre-polymer comprising the ammonium compound and/or phosphoric acid.

Advantageously, the pre-polymer comprising the ammonium compound and/or phosphoric acid is applied 8 to at least a part of a surface of the substrate as explained hereinabove. Various application methods known in the art can be used. A preferred method comprises immersing the substrate into the pre-polymer, thereby contacting (the part of) the surface of the substrate to which the pre-polymer is to be applied with the pre-polymer. The substrate can be immersed in the pre-polymer by means of dipping the substrate in the pre-polymer.

The method further comprises cross-linking 9 of the pre-polymer, thereby obtaining an anti-static coating on the substrate. The cross-linking 9 is advantageously performed as described above.

Optionally, the substrate can be pre-treated 2 prior to applying 8 the pre-polymer to at least a part of a surface of the substrate (so-called pre-treatment). Suitable examples of pre-treatments include cleaning at least (a part of) the surface of the substrate (a so-called pre-cleaning). The pre-cleaning can be performed by methods known in the art. Non-limiting examples include grinding and polishing, chemical cleaning, ultrasonic cleaning, sandblasting, plasma treating at atmospheric pressure or at reduced pressure, corona treating (air plasma), and an alkaline treatment.

Advantageously, the anti-static coating is an inorganic organic hybrid coating. Advantageously, the anti-static coating is a cross-linked inorganic organic hybrid coating. Advantageously, the anti-static coating is bonded to the surface of the substrate by means of polar interaction(s).

Advantageously, the cross-linked inorganic organic hybrid coating comprises one or more of silicon, titanium, zirconium, aluminium, iron, or boron, preferably silicon and/or titanium.

Advantageously, the cross-linked inorganic organic hybrid coating further comprises carbon-silicon bonds.

Advantageously, the coating has a thickness between 1 µm and 20 µm, preferably between 1.2 µm and 10 µm, such as between 1.5 µm and 5 µm. As will be understood, the optimal coating thickness depends, amongst others, on the substrate, in particular its composition and shape, on the required saturation and transparency of the coating, and on the intended use of the article.

### Examples

### Example 1

A ceramic plate and a watch case in ceramic were provided as substrates.

A pre-polymer was prepared. A trimethyl ammonium compound covalently bonded to a silane compound, and phosphoric acid were added to the pre-polymer in an amount so that the pre-polymer comprising the trimetyl ammonium and phosphoric acid comprised 30 % by weight of the trimethyl ammonium compound and phosphoric acid.

The pre-polymer comprising the trimethyl ammonium compound and phosphoric acid was applied to the ceramic substrates by immersing the ceramic substrates into the pre-polymer at a rate of 100 mm/min. After removing the ceramic substrates from the pre-polymer, the pre-polymer present on the ceramic was cross-linked by thermally curing the substrate at 95 °C for 1 hour.

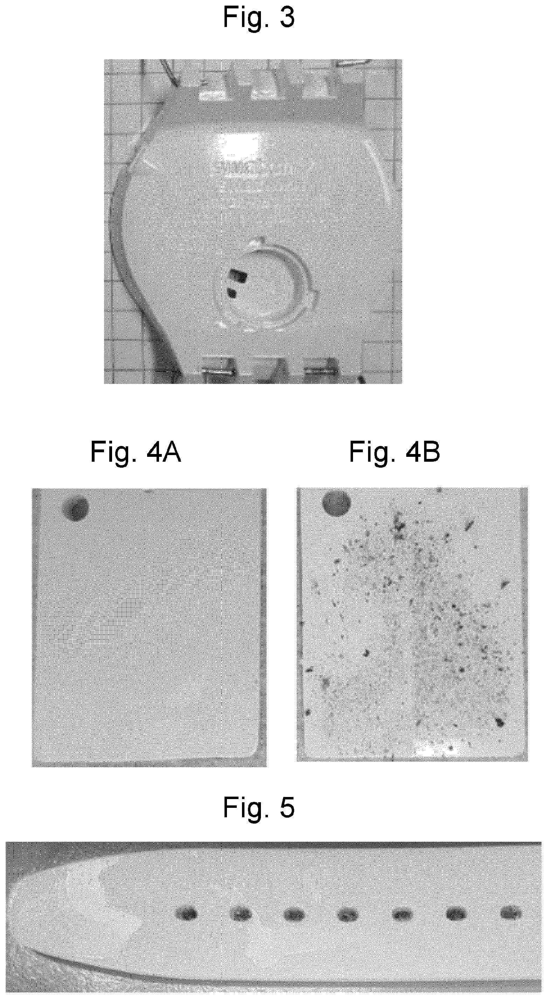

Figure 2 shows the flat ceramic substrate after cross-linking. Figure 3 shows the watch case after cross-linking. It is clear that the anti-static coating homogeneously covers the surfaces.

The anti-static properties were tested by charging the surface by intensive rubbing the surface with a textile tissue, directly followed by positioning the rubbed surface over a tray comprising ashes. The distance between the rubbed surface and the tray was between 3 and 5 cm. The same test was also performed on the reference ceramic substrate without any anti-static treatment.

Figure 4A shows that the reference ceramic substrate attracted a significant amount of ashes, indicating a clear static attraction. Figure 4B shows that the ceramic substrate with the anti-static coating of the invention did not attract any ashes, clearly demonstrating the anti-static properties. Similar results were obtained on the ceramic watch case.

The adhesion of the ceramic samples was tested according to ASTM 3359-95A, and showed an adhesion of 100% (no delamination noticed).

### Example 2

A watch bracelet in thermoplastic polyurethane (TPU) was provided as substrate.

The pre-polymer of example 1 was applied to the TPU bracelet by immersing the bracelet into the pre-polymer at a rate of 100 mm/min. After removing the TPU bracelet from the pre-polymer, the pre-polymer present on the bracelet was cross-linked by thermally curing the substrate at 95 °C for 1 hour.

Figure 5 shows the TPU bracelet after cross-linking. It is clear that the anti-static coating homogeneously covers the surfaces.

The anti-static properties were tested as described for Example 1. The TPU with the anti-static coating of the invention did not attract any ashes, clearly demonstrating the anti-static properties, while the reference TPU, without any anti-static treatment, attracted a significant amount of ashes.

The adhesion of the treated TPU bracelet was tested according to ASTM 3359-95A, and showed an adhesion of 100% (no delamination noticed).

### Nomenclature

1. provision of a substrate
2. optional pre-treatment of the substrate
3. provision of a first compound
4. provision of a second compound
5. hydrolysis
6. condensation
7. adding an ammonium compound and/or phosphoric acid
8. applying to the substrate
9. cross-linking
10. method

## Claims

1. An article comprising a substrate and an anti-static coating present on at least part of a surface of the substrate, wherein the substrate comprises a ceramic and/or a polymer, wherein the anti-static coating is a cross-linked inorganic organic hybrid coating comprising at least one epoxy functional group R¹,
**characterized in that** the cross-linked inorganic organic hybrid coating comprises an ammonium compound and phosphoric acid, the anti-static coating has a surface resistivity of at most 10¹⁰ Ω/cm as measured by means of a multimeter with spot-like electrodes, and the cross-linked inorganic organic hybrid coating comprises silicon and/or titanium.

2. Article according to claim 1, wherein the ammonium compound is a trialkyl ammonium group, optionally bonded to a silane compound.

3. Article according to any one of the preceding claims, wherein the anti-static coating has a surface resistivity of at most 10⁹ Ω/cm, as measured by means of a multimeter with spot-like electrodes.

4. Article according to any one of the preceding claims, wherein the coating has an optical transmittance in the visible light of at least 90 %, preferably at least 95 %.

5. Article according to claim 3, wherein the coating has a luminous absorption of less than 5 %, preferably less than 2 %.

6. Article according to any one of the preceding claims, wherein the cross-linked inorganic organic hybrid coating comprises carbon-silicon bonds and/or carbon-titanium bonds, when the coating comprises silicon and/or titanium, respectively.

7. Article according to any one of the preceding claims, wherein the substrate comprises a ceramic, wherein the ceramic is a hybrid composition of a ceramic and a biosourced compound.

8. Article according to any one of the preceding claims, wherein the substrate comprises a polymer, wherein the polymer is polyurethane, preferably thermoplastic polyurethane.

9. Article according to any one of the preceding claims, wherein the article is a watch component.

10. A method (10) for producing an article comprising a substrate and an anti-static coating present on at least part of a surface of the substrate, wherein the substrate comprises a ceramic and/or a polymer, the method comprising:
- providing a substrate (1) comprising a ceramic and/or a polymer,
- providing a first compound according to formula (I) (3) and a second compound according to formula (II) (4) 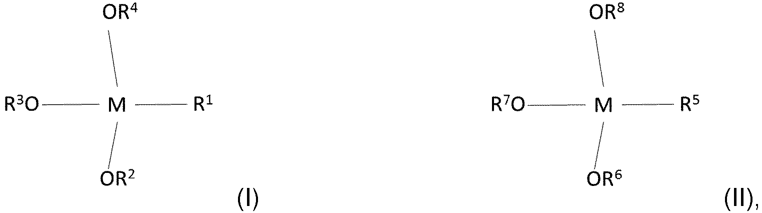 wherein
M is silicon or titanium,
R¹ is an epoxy functional group,
R⁵ is a cross-linkable functional group,
R², R³, R⁴, R⁶, R⁷, and R⁸ are each independently from each other H, a C₁-C₂₀ alkyl, a C₃-C₁₀ aryl, C₂-C₂₀ alkenyl, C₄-C₂₀ alkylaryl, or C₄-C₂₀ arylalkyl,
- hydrolysing (5) the first compound and the second compound in the presence of water,
- condensing (6) the hydrolysed first compound and the hydrolysed second compound, thereby obtaining a pre-polymer comprising R¹ and R⁵ as functional groups,
- adding (7) an ammonium compound and phosphoric acid to the pre-polymer,
- applying (8) the pre-polymer comprising the ammonium compound and/or phosphoric acid to at least part of a surface of the substrate, and
- inducing cross-linking (9) of the cross-linkable functional group R⁵ by exposing the pre-polymer comprising the ammonium compound and/or phosphoric acid to one or more of a temperature up to 250 °C, UV radiation or IR radiation, thereby obtaining an article comprising a substrate and an anti-static coating covering at least part of a surface of the substrate,
**characterized in that** the anti-static coating is a cross-linked inorganic organic hybrid coating comprising at least one functional group R¹, and that the anti-static coating has a surface resistivity of at most 10¹⁰ Ω/cm as measured by means of a multimeter with spot-like electrodes.

11. Method according to claim 10, wherein the ammonium compound is a trialkyl ammonium group, optionally bonded to a silane compound.

12. Method (10) according to any one of claims 10 to 11, wherein R⁵ is a functional group selected from the group consisting of an epoxy, a (meth)acrylate, an ester, a mercapto, a vinyl, and a (meth)acrylated urethane.

13. Method according to claim 10 or claim 12, wherein the cross-linking is performed at a temperature between 50 °C and 200 °C, preferably between 100 °C and 175 °C.

14. Use of an article according to any one of claims 1 to 9 in a watch.

15. Use of a method according to any one of claims 10 to 13, for obtaining an anti-static watch component.

## Patentansprüche

1. Gegenstand, umfassend ein Substrat und eine antistatische Beschichtung, die auf mindestens einem Teil einer Oberfläche des Substrats vorhanden ist, wobei das Substrat eine Keramik und/oder ein Polymer umfasst, wobei die antistatische Beschichtung eine vernetzte anorganisch-organische Hybridbeschichtung ist, die mindestens eine funktionelle Epoxygruppe R¹ aufweist,
**dadurch gekennzeichnet, dass** die vernetzte anorganisch-organische Hybridbeschichtung eine Ammoniumverbindung und Phosphorsäure umfasst, die antistatische Beschichtung einen Oberflächenwiderstand von höchstens 10¹⁰ Ω/cm, gemessen mittels eines Multimeters mit punktförmigen Elektroden, aufweist, und die vernetzte anorganisch-organische Hybridbeschichtung Silizium und/oder Titan umfasst.

2. Gegenstand nach Anspruch 1, wobei die Ammoniumverbindung eine Trialkylammoniumgruppe ist, die optional an eine Silanverbindung gebunden ist.

3. Gegenstand nach einem der vorhergehenden Ansprüche, wobei die antistatische Beschichtung einen Oberflächenwiderstand von höchstens 10⁹ Ω/cm, gemessen mittels eines Multimeters mit punktförmigen Elektroden, aufweist.

4. Gegenstand nach einem der vorhergehenden Ansprüche, wobei die Beschichtung eine Lichtdurchlässigkeit im sichtbaren Licht von mindestens 90 %, vorzugsweise mindestens 95 %, aufweist.

5. Gegenstand nach Anspruch 3, wobei die Beschichtung eine Lichtabsorption von weniger als 5 %, vorzugsweise weniger als 2 % aufweist.

6. Gegenstand nach einem der vorhergehenden Ansprüche, wobei die vernetzte anorganisch-organische Hybridbeschichtung Kohlenstoff-Silizium-Bindungen und/oder Kohlenstoff-Titan-Bindungen umfasst, wenn die Beschichtung Silizium bzw. Titan umfasst.

7. Gegenstand nach einem der vorangehenden Ansprüche, wobei das Substrat eine Keramik umfasst, wobei die Keramik eine Hybridzusammensetzung aus einer Keramik und einer biobasierten Verbindung ist.

8. Gegenstand nach einem der vorhergehenden Ansprüche, wobei das Substrat ein Polymer umfasst, wobei das Polymer Polyurethan, vorzugsweise thermoplastisches Polyurethan, ist.

9. Gegenstand nach einem der vorhergehenden Ansprüche, wobei der Gegenstand ein Uhrenbauteil ist.

10. Verfahren (10) zum Herstellen eines Gegenstands, der ein Substrat und eine antistatische Beschichtung umfasst, die auf mindestens einem Teil einer Oberfläche des Substrats vorhanden ist, wobei das Substrat eine Keramik und/oder ein Polymer umfasst, das Verfahren umfassend:
- Bereitstellen eines Substrats (1), das eine Keramik und/oder ein Polymer umfasst,
- Bereitstellen einer ersten Verbindung gemäß Formel (I) (3) und einer zweiten Verbindung gemäß Formel (II) (4), 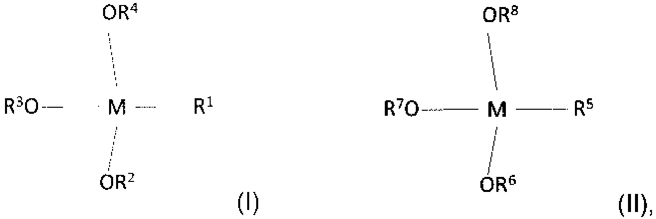 wobei
M Silizium oder Titan ist,
R¹ eine funktionelle Epoxygruppe ist,
R⁵ eine vernetzbare funktionelle Gruppe ist,
R², R³, R⁴, R⁶, R⁷ und R⁸ jeweils unabhängig voneinander H, ein C1-C20-Alkyl, ein C3-C10-Aryl, ein C2-C20-Alkenyl, ein C4-C20-Alkylaryl oder ein C4-C20-Arylalkyl sind,
- Hydrolysieren (5) der ersten Verbindung und der zweiten Verbindung in Gegenwart von Wasser,
- Kondensieren (6) der hydrolysierten ersten Verbindung und der hydrolysierten zweiten Verbindung, wodurch ein Präpolymer erhalten wird, das die funktionellen Gruppen R¹ und R⁵ umfasst,
- Hinzugeben (7) einer Ammoniumverbindung und Phosphorsäure zu dem Präpolymer,
- Aufbringen (8) des Präpolymers, das die Ammoniumverbindung und/oder Phosphorsäure umfasst, auf mindestens einen Teil einer Oberfläche des Substrats, und
- Herbeiführen der Vernetzung (9) der vernetzbaren funktionellen Gruppe R⁵ durch Aussetzen des Präpolymers, das die Ammoniumverbindung und/oder Phosphorsäure umfasst, einer oder mehrerer der folgenden Bedingungen: einer Temperatur von bis zu 250 °C, UV-Strahlung oder IR-Strahlung, wodurch ein Gegenstand erhalten wird, der ein Substrat und eine antistatische Beschichtung umfasst, die mindestens einen Teil einer Oberfläche des Substrats bedeckt,
**dadurch gekennzeichnet, dass** die antistatische Beschichtung eine vernetzte anorganisch-organische Hybridbeschichtung ist, die mindestens eine funktionelle Gruppe R¹ umfasst, und dass die antistatische Beschichtung einen Oberflächenwiderstand von höchstens 10¹⁰ Ω/cm, gemessen mittels eines Multimeters mit punktförmigen Elektroden, aufweist.

11. Verfahren nach Anspruch 10, wobei die Ammoniumverbindung eine Trialkylammoniumgruppe ist, die optional an eine Silanverbindung gebunden ist.

12. Verfahren (10) nach einem der Ansprüche 10 bis 11, wobei R⁵ eine funktionelle Gruppe, ausgewählt aus der Gruppe bestehend aus einer Epoxygruppe, einer (Meth)acrylatgruppe, einer Estergruppe, einer Mercaptogruppe, einer Vinylgruppe und einer (Meth)acrylierten Urethangruppe ist.

13. Verfahren nach Anspruch 10 oder 12, wobei das Vernetzen bei einer Temperatur zwischen 50 °C und 200 °C, vorzugsweise zwischen 100 °C und 175 °C, durchgeführt wird.

14. Verwendung des Gegenstands nach einem der Ansprüche 1 bis 9 in einer Uhr.

15. Verwendung eines Verfahrens nach einem der Ansprüche 10 bis 13 zum Herstellen eines antistatischen Uhrenbauteils.

## Revendications

1. Article comprenant un substrat et un revêtement antistatique présent sur au moins une partie d'une surface du substrat, ledit substrat comprenant une céramique et/ou un polymère, ledit revêtement antistatique étant un revêtement hybride organique-inorganique réticulé comprenant au moins un groupe fonctionnel époxy R¹,
**caractérisé en ce que** le revêtement hybride organique-inorganique réticulé comprend un composé d'ammonium et de l'acide phosphorique, le revêtement antistatique a une résistivité de surface, mesurée au moyen d'un multimètre à électrodes ponctuelles, d'au plus 10¹⁰ Ω/cm, et le revêtement hybride organique-inorganique réticulé comprend du silicium et/ou du titane.

2. Article selon la revendication 1, dans lequel le composé d'ammonium est un groupe trialkylammonium, éventuellement lié à un composé de silane.

3. Article selon l'une quelconque des revendications précédentes, dans lequel le revêtement antistatique a une résistivité de surface, mesurée au moyen d'un multimètre à électrodes ponctuelles, d'au plus 10⁹ Ω/cm.

4. Article selon l'une quelconque des revendications précédentes, dans lequel le revêtement a une transmittance optique dans la lumière visible d'au moins 90 %, de préférence d'au moins 95 %.

5. Article selon la revendication 3, dans lequel le revêtement a une absorption lumineuse inférieure à 5 %, de préférence inférieure à 2 %.

6. Article selon l'une quelconque des revendications précédentes, dans lequel le revêtement hybride organique-inorganique réticulé comprend des liaisons carbone-silicium et/ou des liaisons carbone-titane, lorsque le revêtement comprend respectivement du silicium et/ou du titane.

7. Article selon l'une quelconque des revendications précédentes, dans lequel le substrat comprend une céramique, ladite céramique étant une composition hybride à base d'une céramique et d'un composé d'origine biologique.

8. Article selon l'une quelconque des revendications précédentes, dans lequel le substrat comprend un polymère, ledit polymère étant un polyuréthane, de préférence un polyuréthane thermoplastique.

9. Article selon l'une quelconque des revendications précédentes, ledit article étant un composant de montre.

10. Procédé (10) de production d'un article comprenant un substrat et un revêtement antistatique présent sur au moins une partie d'une surface du substrat, ledit substrat comprenant une céramique et/ou un polymère, le procédé comprenant :
- la fourniture d'un substrat (1) comprenant une céramique et/ou un polymère,
- la fourniture d'un premier composé selon la formule (I) (3) et d'un deuxième composé selon la formule (II) (4) 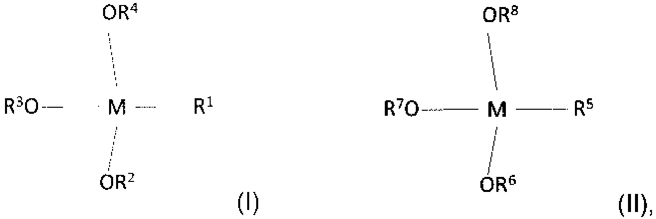 dans lesquelles
M représente le silicium ou le titane,
R¹ est un groupe fonctionnel époxy,
R⁵ est un groupe fonctionnel réticulable,
R², R³, R⁴, R⁶, R⁷ et R⁸ représentent chacun, indépendamment les uns des autres, H, un alkyle en C₁-C₂₀, un aryle en C₃-C₁₀, un alcényle en C₂-C₂₀, un alkylaryle en C₄-C₂₀ ou un arylalkyle en C₄-C₂₀,
- l'hydrolyse (5) du premier composé et du deuxième composé en présence d'eau,
- la condensation (6) du premier composé hydrolysé et du deuxième composé hydrolysé, pour ainsi obtenir un prépolymère comprenant R¹ et R⁵ en tant que groupes fonctionnels,
- l'ajout (7) d'un composé d'ammonium et d'acide phosphorique au prépolymère,
- l'application (8) du prépolymère comprenant le composé d'ammonium et/ou l'acide phosphorique à au moins une partie d'une surface du substrat, et
- l'induction de la réticulation (9) du groupe fonctionnel réticulable R⁵ par exposition du prépolymère comprenant le composé d'ammonium et/ou l'acide phosphorique à une température allant jusqu'à 250 °C, à un rayonnement UV et/ou à un rayonnement IR, pour ainsi obtenir un article comprenant un substrat et un revêtement antistatique recouvrant au moins une partie d'une surface du substrat,
**caractérisé en ce que** le revêtement antistatique est un revêtement hybride organique-inorganique réticulé comprenant au moins un groupe fonctionnel R¹, et **en ce que** le revêtement antistatique a une résistivité de surface, mesurée au moyen d'un multimètre à électrodes ponctuelles, d'au plus 10¹⁰ Ω/cm.

11. Procédé selon la revendication 10, dans lequel le composé d'ammonium est un groupe trialkylammonium, éventuellement lié à un composé de silane.

12. Procédé (10) selon l'une quelconque des revendications 10 et 11, dans lequel R⁵ est un groupe fonctionnel choisi dans le groupe constitué par un époxy, un (méth)acrylate, un ester, un mercapto, un vinyle et un uréthane (méth)acrylé.

13. Procédé selon la revendication 10 ou la revendication 12, dans lequel la réticulation est effectuée à une température comprise entre 50 °C et 200 °C, de préférence entre 100 °C et 175 °C.

14. Utilisation d'un article selon l'une quelconque des revendications 1 à 9 dans une montre.

15. Utilisation d'un procédé selon l'une quelconque des revendications 10 à 13 pour l'obtention d'un composant de montre antistatique.
